# EUROPÄISCHE PATENTSCHRIFT

(11) **EP 2 698 077 B1**
(45) Veröffentlichungstag und Bekanntmachung des Hinweises auf die Patenterteilung: **04.05.2022**
(21) Anmeldenummer: 13175906.0
(22) Anmeldetag: 10.07.2013
(51) Int. Cl.: A47B 96/20, B32B 21/04, B32B 3/12, E04C 2/36, F16B 5/01

(54) **Leichtbauplatte, Möbel und Herstellungsverfahren**
Lightweight panel, furniture and production method
Panneau de construction léger, meuble et procédé de fabrication

(30) Priorität: 13.08.2012 DE 102012015879
(43) Veröffentlichungstag der Anmeldung: 19.02.2014
(73) Patentinhaber: Fritz Egger GmbH & Co. OG, 6380 St. Johann in Tirol (AT)
(72) Erfinder: Frech, Hannes, 3100 St. Pölten (AT); Riepertinger, Manfred, 83093 Bad Endorf (DE)
(74) Vertreter: Cohausz & Florack

(56) Entgegenhaltungen:
- WO-A1-2009/040863
- DE-A1-102009 031 101
- DE-A1-102009 058 359
- DE-U1-202008 002 540

## Beschreibung

Die Erfindung betrifft eine Leichtbauplatte, die zwei erste Schmalseiten, zwei dazu orthogonale zweite Schmalseiten sowie zwei zu den Schmalseiten orthogonale Breitseiten aufweist, mit zwei Deckplatten, mit einer zwischen den Deckplatten angeordneten leichten Mittellage, die mit den Deckplatten verklebt ist, und mit einem die beiden Deckplatten innenseitig berührenden, zwischen die Deckplatten in eine einen Radius aufweisende Ausnehmung eingesetzten Bauteil, wobei das Bauteil mehrere Schmalseiten und zwei dazu orthogonale, zu den Deckplatten gewandte Breitseiten aufweist und wobei mindestens eine der Schmalseiten des Bauteils einen geraden Verlauf und mindestens eine daran angrenzende weitere Schmalseite einen gebogenen Verlauf hat. Darüber hinaus betrifft die Erfindung ein Möbel mit mindestens einer solchen Leichtbauplatte. Ferner betrifft die Erfindung ein Verfahren zur Herstellung einer solchen Leichtbauplatte.

Aus dem Stand der Technik ist es beispielsweise bei der Möbelherstellung bekannt, Seitenteile eines Möbels mit einem orthogonal dazu verlaufenden Haupt oder Boden mittels Bolzen in Form von stiftförmigen Holzdübeln zu verbinden.

Üblicherweise werden dazu in die Verbindungsfläche der miteinander zu verbindenden Bauteile Bohrungen als Aufnahme für die Holzdübel eingebracht. Beispielsweise werden in die Böden jeweils zwei parallele Bohrungen und in das Seitenteil an den im montierten Zustand gegenüberliegenden Stellen entsprechende Bohrungen in das Material eingebracht. Bei dem Material handelt es sich in der Regel um einen plattenförmigen Holzwerkstoff, also eine Platte aus mit einem Bindemittel versehenen und miteinander verpressten Holzpartikeln (Holzwerkstoffplatte), beispielsweise eine Span-, Faser- oder OSB-Platte (Oriented Strand Board Platte). Die Holzdübel werden unter Kraftschluss in die Bohrungen eingesetzt und verbinden auf diese Weise die einzelnen Bauteile miteinander.

Im zunehmenden Masse werden bei der Möbelproduktion heutzutage auch so genannte Leichtbauplatten eingesetzt. Damit sind aus zwei Deckplatten und einer dazwischen angeordneten leichten Mittellage bestehende plattenförmige Bauteile gemeint, die als Deckplatten insbesondere Holzwerkstoffplatten, wie z.B. Span-, Faser- oder OSB-Platten, aufweisen. Leichte Mittellage bedeutet, dass das Gewicht und/oder die Dichte der Mittellage (auf das Volumen der Lage bezogen) geringer als bei den Deckplatten ist.

Beispielsweise wird als leichte Mittellage eine Wabenstruktur, insbesondere Kartonwabenstruktur, oder eine Schaumplatte verwendet. Um die leichte Mittellage zu schützen und die Stabilität einer Leichtbauplatte zu erhöhen, ist es auch bekannt, einen oder mehrere Riegel, dass heißt balkenförmige Elemente aus Massivholz oder einem Holzwerkstoff, oder Rahmen aus mehreren miteinander verbundenen Riegeln in der Leichtbauplatte, insbesondere im Kantenbereich vorzusehen. Die Riegel haben zwangsläufig materialbedingt eine höhere Dichte als die übrige Mittellage.

Problematisch bei Leichtbauplatten ist allerdings, dass die Mittellage, gerade dann, wenn es sich um eine Wabenstruktur handelt, keinen ausreichenden Halt für einen herkömmlichen Dübels bietet und erst recht keinen Kraftschluss zwischen solch einem Dübel und der Mittellage gewährleistet. Bei der Möbelherstellung können daher Leichtbauplatten nur bedingt und nur unter erhöhtem Aufwand verwendet werden. insbesondere können Leichtbauplatten nicht als diejenigen Bauteile eingesetzt werden, welche zur schmalseitigen Aufnahme von Holzdübeln vorgesehen sind, beispielsweise das Haupt oder die Böden des Möbels.

Wie gesagt ist es auch bekannt, Leichtbauplatten im Bereich ihrer Stirnkante mit einem Riegel, beispielsweise Querriegel, zu versehen, der zwischen den beiden Deckplatten im Bereich der Mittellage angeordnet ist und aus Vollmaterial besteht. Solche Leichtbauplatten sind aber einerseits aufwändig in ihrer Herstellung und andererseits auch schwerer als riegellose Leichtbauplatten.

Aus der WO 2009/040863 A1 ist eine Leichtbauplatte mit zwei Deckplatten, mit einer zwischen den Deckplatten angeordneten und damit verklebten Mittellage und mit einem Bauteil, welches an den Ecken der Leichtbauplatte zwischen den Deckplatten angeordnet ist, bekannt.

Es ist daher die Aufgabe der vorliegenden Erfindung, eine Leichtbauplatte, ein entsprechendes Möbel und ein entsprechendes Herstellungsverfahren anzugeben, womit eine Vereinfachung der Verbindung der Leichtbauplatte mit einem weiteren Möbelteil gewährleistet ist.

Die zuvor hergeleitete und aufgezeigte Aufgabe wird gemäß einer ersten Lehre der vorliegenden Erfindung bei einer Leichtbauplatte, die zwei erste Schmalseiten, zwei dazu orthogonale zweite Schmalseiten sowie zwei zu den Schmalseiten orthogonale Breitseiten aufweist, mit zwei Deckplatten - diese bilden die Breitseiten der Leichtbauplatte - , mit einer zwischen den Deckplatten angeordneten leichten Mittellage, die mit den Deckplatten verklebt ist, und mit einem die beiden Deckplatten innenseitig berührenden, zwischen die Deckplatten in eine einen Radius aufweisende Ausnehmung eingesetzten Bauteil, wobei das Bauteil mehrere Schmalseiten und zwei dazu orthogonale, zu den Deckplatten gewandte Breitseiten aufweist, und wobei mindestens eine der Schmalseiten des Bauteils einen geraden Verlauf und mindestens eine, vorzugsweise genau eine, daran angrenzende weitere Schmalseite einen gebogenen Verlauf hat, dadurch gelöst, dass das Bauteil mindestens eine Vertiefung, z.B. ein durchgehendes Loch (Durchgangsloch) oder ein Sackloch, aufweist, die zur Aufnahme, insbesondere zur kraft- und/oder stoffschlüssigen Aufnahme, eines Bolzens geeignet (konfiguriert) ist, dass die weitere Schmalseite, in einem Schnitt parallel zu den zu den Deckplatten gewandten Breitseiten des Bauteils, die Form eines Kreisbogens hat und dass der Radius der Ausnehmung in der Leichtbauplatte so auf den Radius des Kreisbogens der weiteren Schmalseite abgestimmt ist, dass die weitere Schmalseite mit dem gebogenen Verlauf die Innenseite der Ausnehmung in der Leichtbauplatte durchgängig berührt.

Als Bolzen sind insbesondere Dübel, beispielsweise Holz- oder Kunststoffdübel, verwendbar. Die Bolzen können mit einem Gewinde versehen oder gewindelos sein.

Erfindungsgemäß wird mit dem besagten Bauteil ein Einsatzteil (Insert) in die Leichtbauplatte eingesetzt, welches auf einfache Weise eine mit einem Fräswerkzeug (Fräskopf) erzeugte Ausnehmung zwischen den Deckplatten nahezu vollständig ausfüllen kann. Bei einem Fräskopf handelt es sich um ein um eine zur Leichtbauplattenebene senkrechte Achse rotierendes Werkzeug, welches eine Ausnehmung mit einer entsprechenden Form in der Leichtbauplatte erzeugt. Die Ausnehmung ist dabei orthogonal zur Leichtbauplattenebene, das heißt in Verlaufsrichtung der Rotationsachse des Fräswerkzeugs, nach oben und unten von jeweils einer der Deckplatten begrenzt. Die Kontur des gebogenen Teils der Ausnehmung entspricht dabei dem Außenumfang des Fräswerkzeugs, also der Bahn der rotierenden Schneiden.

Der vorliegenden Erfindung liegt der Gedanke zugrunde, diese vom Fräswerkzeug erzeugte Form der Ausnehmung möglichst vollständig mit einem Bauteil auszufüllen, welches geeignet ist, einen Bolzen aufzunehmen. Auf diese Weise erreicht die Leichtbauplatte an dieser Stelle ausreichende Festigkeitseigenschaften, um beispielsweise als Teil eines Möbels, beispielsweise als Regalfach oder -boden, eingesetzt werden zu können. Gleichzeitig wird aber auch das Gesamtgewicht der Leichtbauplatte, das heißt des Schichtaufbaus aus Deckplatten und Mittellage einschließlich des den mindestens einen Bolzen aufnehmenden Bauteils, auf ein Minimum reduziert. Die Leichtbauplatte muss keine separaten Riegel im Kantenbereich aufweisen, um einen Bolzen aufnehmen zu können, weshalb das Gewicht der erfindungsgemäßen Leichtbauplatte auch deutlich gegenüber einer Riegel enthaltenden Leichtbauplatte verringert werden kann. Vorzugsweise ist daher die erfindungsgemäße Leichtbauplatte eine solche, die zumindest in dem Bereich, in welchem Bolzen in die Leichtbauplatte eingesetzt werden, frei von Riegeln ist und die vorzugsweise insgesamt riegellos ist.

Ein weiterer Vorteil des erfindungsgemäß eingesetzten Bauteils (Inserts) ist, dass dieses bei geeigneter Materialwahl mit einfachen Mitteln vorgefertigt werden kann, beispielsweise als Spritzgussteil, und von vorne herein während der Herstellung des Bauteils die Vertiefung für den bzw. die Bolzen vorgesehen werden kann. Es müssen also nicht in eine Leichtbauplatte mit einem Fräswerkzeug Aufnahmen für Riegel eingebracht und anschließend in den Riegeln mit einem separaten Werkzeug Bohrungen für die Bolzen vorgesehen werden, sondern die Bauteile, die zur Aufnahme des mindestens einen Bolzens dienen, können bereits vollständig vorgefertigt sein und als Schüttgut dem Leichtbauplattenherstellungsprozess zugeführt werden.

Darüber hinaus ist noch ein weiterer Vorteil, dass das Bauteil aufgrund der mindestens einen Schmalseite, die einen gebogenen Verlauf hat, insbesondere aufgrund der genau einen Schmalseite, die einen gebogenen Verlauf hat, weniger Abfall bei der Leichtbauplattenherstellung verursacht, da das Fräswerkzeug nicht wie bei dem Einbringen eines Riegels in eine Leichtbauplatte an der gesamten Schmalseite entlang geführt werden muss, sondern nur an einer Stelle in Richtung der Leichtbauplattenmitte eingetaucht werden muss, wodurch nur ein Minimum an Mittellagenmaterial und/oder Deckplattenmaterial aus dem Schichtaufbau aus Deckplatten und Mittellage entfernt wird.

Bei der erfindungsgemäßen Leichtbauplatte handelt es sich bei den Deckplatten insbesondere um Holzwerkstoffplatten, beispielsweise Span-, Faser- oder OSB-Platten. Die Mittellage hat, bezogen auf ihr Volumen, eine geringere Dichte und/oder ein geringeres Gewicht, als die Decklagen und wird daher als leichte Mittellage bezeichnet. Insbesondere handelt es sich bei der Mittellage um eine Wabenstruktur, vorzugsweise eine Pappwabenstruktur, oder um eine Schaumplatte.

Wie bereits erläutert, soll das erfindungsgemäß eingesetzte Bauteil möglichst optimal die von einem umlaufenden Fräswerkzeug erzeugte Ausnehmung ausfüllen. Zu diesem Zweck kann die Schmalseite, welche einen gebogenen Verlauf hat, im Folgenden auch als weitere Schmalseite bezeichnet, auf verschiedene Weise geformt sein.

Erfindungsgemäß ist vorgesehen, dass die weitere Schmalseite, in einem Schnitt parallel zu den zu den Deckplatten gewandten Breitseiten des Bauteils die Form eines Kreisbogens hat. Mit anderen Worten folgt die Schmalseite exakt der äußeren Kontur einer Kreislinie.

Bevorzugt ist die äußere Kontur der weiteren Schmalseite abhängig von der Stelle, an der das umlaufende Fräswerkzeug die Ausnehmung in der Leichtbauplatte vorgesehen hat, das heißt in die Leichtbauplatte eingetaucht ist. So kann die Ausnehmung an einer Ecke der Leichtbauplatte, an der also zwei Kanten der Leichtbauplatte aufeinander treffen, oder an einer Kante der Leichtbauplatte, also beabstandet zu den Ecken, vorgesehen sein. Wird die Ausnehmung exakt (spiegelsymmetrisch) an einer Ecke der Leichtbauplatte vorgesehen, kann die Ausnehmung zumindest im Idealfall die Form eines Viertelkreises haben. Wird die Ausnehmung dagegen im Kantenbereich beabstandet zu den Ecken vorgesehen, kann die Ausnehmung im Idealfall die Form eines Halbkreises haben. Der besagte Idealfall wird aber beim Herstellen der Ausnehmung in der Regel nicht erreicht werden, da ein umlaufendes Fräswerkzeug üblicherweise an einer Spindel geführt ist, die koaxial zu dem umlaufenden Fräswerkzeug angeordnet ist. Da die Spindel zwangsläufig einen bestimmten Durchmesser hat, kann das Fräswerkzeug zumindest um das Maß des halben Spindeldurchmessers (um das Maß des Spindelradius) nicht in die Leichtbauplatte eintauchen, weshalb die Ausnehmung in diesem Fall nur die Form eines Abschnitts eines Kreissegmentes (wenn die Ausnehmung in einer Ecke der Leichtbauplatte vorgesehen wird) oder die Form eines Kreissegmentes (wenn die Ausnehmung an einer Kante der Leichtbauplatte vorgesehen wird) haben wird. Gleichwohl ist es aber auch bei geeignetem Antrieb des Fräswerkzeugs möglich, einen Viertelkreis bzw. Halbkreis zu erreichen.

Gemäß einer weiteren Ausgestaltung ist vorgesehen, dass die äußere Kontur der weiteren Schmalseite des Bauteils, in einem Schnitt parallel zu den zu den Deckplatten gewandten Breitseiten des Bauteils, die Form eines Kreisbogens eines Halbkreises oder Kreissegmentes hat, wobei das Bauteil genau zwei Schmalseiten aufweist, von denen eine Schmalseite den geraden Verlauf und die weitere Schmalseite den gebogenen Verlauf hat.

Alternativ ist es denkbar, dass die äußere Kontur der weiteren Schmalseite des Bauteils, in einem Schnitt parallel zu den zu den Deckplatten gewandten Breitseiten des Bauteils, die Form eines Kreisbogens eines Viertelkreises oder Abschnitts eines Kreissegmentes hat, wobei das Bauteil genau drei Schmalseiten aufweist, von denen zwei orthogonal zueinander verlaufende Schmalseiten den geraden Verlauf und die weitere Schmalseite den gebogenen Verlauf hat.

Entsprechend kann die Ausnehmung in der Leichtbauplatte, in einem Schnitt parallel zu den Breitseiten der Leichtbauplatte, die Form eines Kreisbogens eines Halbkreises oder Kreissegmentes oder aber die Form eines Kreisbogens eines Viertelkreises oder Abschnitts eines Kreissegmentes haben.

Erfindungsgemäß füllt das in die von dem Fräswerkzeug erzeugte Ausnehmung eingesetzte Bauteil, das heißt das Insert, die Ausnehmung möglichst vollständig aus.

So berührt gemäß einer weiteren Ausgestaltung der Leichtbauplatte die weitere Schmalseite mit dem gebogenen Verlauf die Innenseite der Ausnehmung in der Leichtbauplatte, insbesondere einen in einer oder beiden Deckplatten vorgesehenen Teil der Ausnehmung, abschnittsweise oder durchgängig. Mit anderen Worten, in dem Fall, dass die weitere Schmalseite des Bauteils einen gebogenen Verlauf hat, kann diese Schmalseite die Innenseite der Ausnehmung entweder abschnittsweise oder durchgängig berühren. Wenn eine Mittellage aus einem Wabenmaterial vorgesehen ist, werden die Stege der Wabenkammern der Mittellage, die die Innenseite der Ausnehmung bilden, die gebogene Schmalseite beispielsweise abschnittsweise berühren. Handelt es sich bei dem Mittellagenmaterial um ein Vollmaterial oder Schaummaterial, wird die weitere Schmalseite das Mittellagenmaterial im Bereich der Ausnehmung beispielsweise durchgängig berühren. Entsprechendes gilt auch für den Fall, dass die Ausnehmung bis in den Bereich der Deckplatten reicht, das Fräswerkzeug also auch einen Teil der ursprünglichen Holzwerkstoffplatten entfernt hat. In diesem Fall bildet auch ein Teil der Deckplatten die Innenseite der Ausnehmung, so dass es möglich ist, dass die weitere Schmalseite diesen Teil der Ausnehmung durchgängig berührt.

Zuvor wurde bereits erläutert, dass in dem Fall, dass das umlaufende Fräswerkzeug, welches die Ausnehmung in der Leichtbauplatte herstellt, von einer zu dem Fräskopf koaxialen Spindel angetrieben wird, die Ausnehmung nicht exakt die Form eines Viertelkreises oder Halbkreises haben kann, da die Spindel nicht beliebig weit in Richtung der Leichtbauplattenmitte bewegt werden kann, sondern die Bewegung zwangsläufig durch die Stirnkante einer der Deckplatten begrenzt sein wird. Gleichwohl kann es aber u.a. aus herstellungstechnischen Gründen einfacher sein, das Bauteil, welches in die Ausnehmung eingesetzt wird, als Viertelkreis oder Halbkreis auszubilden. Wird das Fräswerkzeug so angetrieben, dass die Ausnehmung einen Viertelkreis oder Halbkreis bildet, ist der Radius der Ausnehmung in der Leichtbauplatte gleich dem Radius des Kreisbogens ist.

Gemäß einer weiteren Ausgestaltung ist vorgesehen, dass der Abstand zwischen der weiteren Schmalseite des Bauteils und der Innenseite der Ausnehmung in der Leichtbauplatte, insbesondere einem in einer oder beiden Deckplatten vorgesehenen Teil der Ausnehmung, maximal dem 2-Fachen der Dicke einer der Deckplatten, bevorzugt maximal der Dicke einer der Deckplatten und besonders bevorzugt maximal der Hälfte der Dicke einer der Deckplatten, entspricht. Auf diese Weise ist immer eine ausreichende Stabilität der Leichtbauplatte im Übergangsbereich zwischen dem Bauteil und dem Mittellagenmaterial gewährleistet.

Gemäß wiederum einer weiteren Ausgestaltung der erfindungsgemäßen Leichtbauplatte hat das Bauteil eine zu einer Ebene (Symmetrieebene), die orthogonal zu den Breitseiten des Bauteils verläuft, spiegelsymmetrischen Form. Die Ebene verläuft dabei durch die Winkelhalbierende der Schmalseiten, die einen geraden Verlauf haben, wenn, wie beispielsweise bei einem Viertelkreis, zwei solche Schmalseiten mit einem geraden Verlauf vorhanden sind. In dem Fall, dass das ein Insert bildende Bauteil die Form eines Halbkreises hat, verläuft die Winkelhalbierende senkrecht zu der einzigen Schmalseite, die einen geraden Verlauf hat, und durch die Mitte dieser Schmalseite. Die Symmetrie betrifft dabei nicht nur die äußere Kontur, sondern auch die Anzahl und Form von Vertiefungen (z.B. Durchgangslöchern oder Sacklöchern) zur Bolzenaufnahme. So können je nach Form und äußerer Kontur des Bauteils zwei winklig zueinander verlaufende, insbesondere senkrecht zueinander verlaufende, Vertiefungen zur Aufnahme von Bolzen vorgesehen sein oder aber eine einzelne Vertiefung oder ein Paar von parallelen Vertiefungen. Eine spiegelsymmetrische Form des Bauteils hat oft den Vorteil, dass die Verarbeitung des Bauteils in einem automatisierten Prozess vereinfacht werden kann, weil das Bauteil nicht aus einer vorbestimmten Lage, wie etwa einem Magazin, entnommen werden muss, sondern als Schüttgut bereitgestellt werden kann.

Das Bauteil kann wie bereits angedeutet wurde, aus verschiedenen Materialen bestehen. Gemäß einer Ausgestaltung der erfindungsgemäßen Leichtbauplatte besteht das Bauteil zumindest abschnittsweise, vorzugsweise vollständig, aus Holz, aus einem Holzwerkstoff, aus Kunststoff oder aus WPC (wood plastic compound, Holz-Kunststoff-Verbund). Im Falle von Kunststoff oder WPC kann das Bauteil auch ein Spritzgussteil sein, wobei eventuelle Hohlräume und/oder Vertiefungen insbesondere für den oder die Bolzen, bereits während des Spritzgießens vorgesehen werden können.

Damit das Bauteil besonders leicht ist, weist dieses gemäß noch einer Ausgestaltung der erfindungsgemäßen Leichtbauplatte zusätzlich zu der Vertiefung für den Bolzen einen oder mehrere weitere Hohlräume, wie sie zuvor bereits erwähnt wurden, auf. Diese Hohlräume können zur Außenseite hin offen oder geschlossen sein und beispielsweise durch Stege (Wände) voneinander getrennt sein.

Gemäß wiederum einer weiteren Ausgestaltung der erfindungsgemäßen Leichtbauplatte ist das Bauteil, abhängig vom Einsatzzweck der Leichtbauplatte, an einer Ecke der Leichtbauplatte oder an einer Kante der Leichtbauplatte eingesetzt. Ecke meint dabei wie gesagt den Bereich, an dem zwei Kanten aufeinander treffen; Kante meint den Bereich einer Leichtbauplatte, der von den Ecken beabstandet ist.

Schließlich kann gemäß noch einer Ausgestaltung ein Bolzen in die Vertiefung in das Bauteil eingesetzt sein. Bei dem Bolzen kann es sich wie gesagt um einen Dübel, insbesondere um einen Holz- oder Kunststoffdübel, handeln. Der Bolzen kann mit einem Gewinde versehen oder gewindelos sein. Im Falle des Vorhandenseins eines Gewindes kann dieses auch nur über einen Abschnitt der Länge des Bolzens verlaufen, das heißt mindestens ein anderer Längenabschnitt ist gewindelos. Der das Gewinde aufweisende oder der gewindelose Längenabschnitt ragt dann beispielsweise aus dem Bauteil heraus. Der Bolzen kann stoffschlüssig, also mit Hilfe eines Klebemittels, oder kraftschlüssig (reibschlüssig) in die Vertiefung eingesetzt sein.

Die Aufgabe wird ferner gemäß einer zweiten Lehre der vorliegenden Erfindung gelöst durch ein Möbel mit mindestens einer Leichtbauplatte, wie sie zuvor beschrieben wurde, und einem weiterem Möbelteil, beispielsweise einem Seitenteil eines Regals, das über das Bauteil und mindestens einen Bolzen, insbesondere einen wie zuvor definierten Dübel, mit der mindestens einen Leichtbauplatte verbunden ist.

Schließlich wird die Aufgabe gemäß einer dritten Lehre der vorliegenden Erfindung auch bei einem Verfahren zur Herstellung einer Leichtbauplatte, wie sie zuvor beschrieben wurde, dadurch gelöst, dass in einem ersten Schritt ein Schichtaufbau mit zwei Deckplatten und einer Mittellage hergestellt wird und die Mittellage mit den Deckplatten verklebt wird, und dass in einem nachfolgenden zweiten Schritt eine Ausnehmung zwischen den Deckplatten vorgesehen wird, in die das Bauteil eingesetzt wird.

Bei dem erfindungsgemäßen Verfahren wird also zuerst ein Schichtaufbau aus Deckplatten und Mittellage hergestellt und in einer Presseinrichtung zu einer Rohplatte (Wabenplatte) verpresst. Anschließend wird in einem weiteren Schritt eine Ausnehmung zwischen den Deckplatten vorgesehen, wobei auch ein Teil der Deckplatten entfernt werden kann, die Ausnehmung aber nach wie vor nach oben und unten durch die Deckplatten begrenzt bleibt, wobei das Bauteil in diese Ausnehmung eingesetzt wird.

Dabei kann die Ausnehmung entweder in einem separaten Schritt hergestellt werden, der unabhängig von dem Einsetzen des Bauteils in die Ausnehmung erfolgt. Dies kann beispielsweise durch ein Fräswerkzeug durchgeführt werden, wie dies bereits vorangehend beschrieben wurde. In diesem Fall wird gemäß einer Ausgestaltung des erfindungsgemäßen Verfahrens die Ausnehmung in der Leichtbauplatte von einem rotierenden Fräskopf erzeugt und das Bauteil anschließend in die Ausnehmung eingesetzt.

Alternativ ist es aber auch denkbar, dass die Ausnehmung in der Leichtbauplatte durch Einpressen des Bauteils in die Mittellage erzeugt wird, wodurch das Material der Mittellage verdrängt wird. Mit anderen Worten wird in diesem Fall die Ausnehmung nicht in einem separaten, vorangehenden Schritt durch ein Fräswerkzeug hergestellt, sondern das Bauteil wird seitlich in die Leichtbauplatte und insbesondere in das (relativ weiche) Mittellagenmaterial eingedrückt. Zu diesem Zweck weist die Leichtbauplatte bevorzugt eine Wabenstruktur, insbesondere eine Kartonwabenstruktur, als Mittellage auf, da dann das Material (speziell die Stege, die die Wabenkammern der Mittellage bilden) besonders einfach ins Innere der Leichtbauplatte verdrängt werden können.

Schließlich kann das Bauteil noch mit den Deckplatten und gegebenenfalls auch mit der Mittellage verklebt werden, um maximale Festigkeitswerte zu erreichen.

Es gibt nun eine Vielzahl von Möglichkeiten, die erfindungsgemäße Leichtbauplatte, das erfindungsgemäße Möbel und das erfindungsgemäße Verfahren auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Figuren 1a) und b): perspektivische Ansichten eines erfindungsgemäßen Bauteils zur Aufnahme eines Bolzens,
- Figur 2a): das Bauteil aus den Figuren 1a) und b) im in eine erfindungsgemäße Leichtbauplatte eingesetzten Zustand in einer perspektivischen Ansicht,
- Figur 2b): das Bauteil aus den Figuren 1a) und b) im in eine erfindungsgemäße Leichtbauplatte eingesetzten Zustand in einer Draufsicht,
- Figur 3: das Bauteil aus den Figuren 1a) und b) im in eine erfindungsgemäße Leichtbauplatte eingesetzten Zustand in einer Schnittansicht entlang der Schnittlinie III III,
- Figur 4: ein alternatives Ausführungsbeispiel einer erfindungsgemäßen Leichtbauplatte mit eingesetztem Bauteil zur Aufnahme eines Bolzens und
- Figuren 5a) bis c): verschiedene Ausführungsbeispiele von spiegelsymmetrischen erfindungsgemäßen Bauteilen zur Aufnahme von Bolzen mit einer gebogenen Schmalseite.

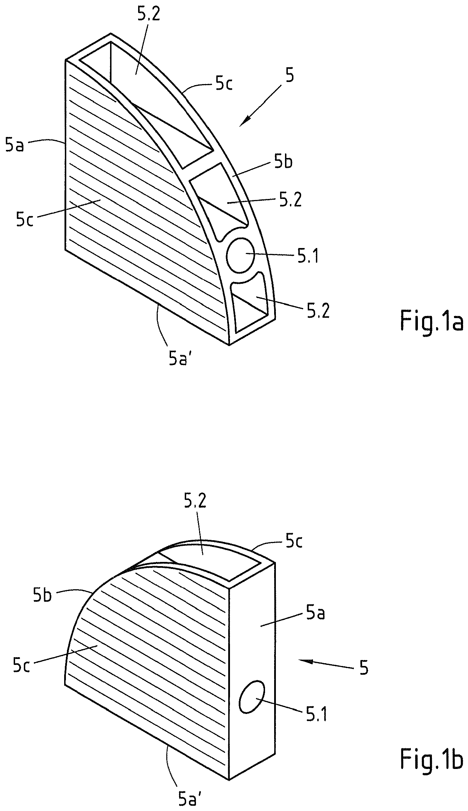

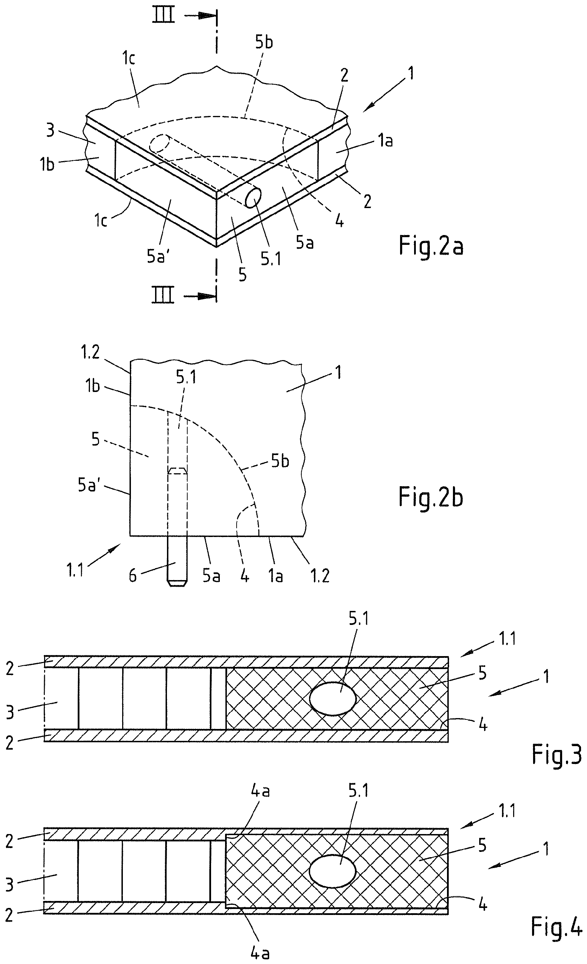

In den Figuren 1a) und b) ist ein Bauteil 5 dargestellt, welches als Insert bei einer Leichtbauplatte 1 in eine Ausnehmung 4 eingesetzt wird, die in einer Ecke 1.1 der Leichtbauplatte 1 vorgesehen ist. Der eingesetzte Zustand ist schematisch in Figur 2a) dargestellt.

Das Bauteil 5, welches im Weiteren noch näher beschrieben wird, dient zur Aufnahme eines Bolzens in Form eines Dübels 6, wofür eine Vertiefung 5.1 vorgesehen ist, die so konfiguriert ist, das der Dübel 6 von dieser kraft- und/oder stoffschlüssig aufgenommen werden kann.

Wie die Figuren 2a) und b) sowie Figur 3 zeigen, weist die Leichtbauplatte 1, in die das Bauteil 5 in der Ecke 1.1 eingesetzt wird, zwei erste Schmalseiten 1a, zwei dazu orthogonale zweite Schmalseiten 1b sowie zwei zu den Schmalseiten 1a und 1b orthogonale Breitseiten 1c auf. Die Leichtbauplatte 1 besteht aus einem Schichtaufbau aus zwei Deckplatten 2 und einer zwischen den Deckplatten 2 angeordneten und mit diesen verklebten leichten Mittellage 3.

Bei den Deckplatten 2 handelt es sich hier um eine Holzwerkstoffplatte, insbesondere Spanplatte. Bei der Mittellage 3 handelt es sich hier um eine Wabenstruktur, insbesondere Pappwabenstruktur.

Figur 3 zeigt den Schnitt entlang der Schnittlinie III III, die in Figur 2a) dargestellt ist und die Winkelhalbierende zwischen den beiden geraden Schmalseiten 1a und 1b der Leichtbauplatte 1 bildet.

In der Schnittdarstellung in Figur 3 ist zu erkennen, dass das Bauteil 5 die beiden Deckplatten 2 innenseitig berührt und durch Verkleben miteinander verbindet. Figur 4 zeigt eine vergleichbare Schnittansicht, wobei im Unterschied zu dem Ausführungsbeispiel in Figur 3 bei dem Ausführungsbeispiel in Figur 4 die Ausnehmung 4 jedoch bis in den Bereich der Deckplatten 2 ragt, also auch von den Deckplatten 2 Material entfernt wurde. Die Deckplatten bilden also einen Teil 4a der Ausnehmung 4. Letzterer Fall hat den Vorteil, dass das Bauteil 5 beim Einsetzen in die Ausnehmung 4 einen Anschlag an den Deckplatten 2 erfährt. Auf diese Weise ist es besonders einfach, das Bauteil 5 soweit in die Ausnehmung 4 einzusetzen, dass die nach außen gewandten Schmalseiten 5a und 5a' des Bauteils 5 nicht zur Seite hin über die Deckplatten 2 hinausragen, sondern bevorzugt eine ebene Schmalseite der Leichtbauplatte 1 bilden.

Ein Ausführungsbeispiel des Bauteils 5 wird im Folgenden anhand der Figuren 1a und 1b erklärt. Das Bauteil 5 weist mehrere Schmalseiten 5a, 5a' und 5b sowie zwei dazu orthogonale Breitseiten 5c auf, wobei die Breitseiten 5c im eingesetzten Zustand des Bauteils 5 zu den Deckplatten 2 gewandt sind. Die Breitseiten 5c können eine glatte oder unebene Oberfläche aufweisen und insbesondere aufgeraut sein oder, wie in den Figuren 1a) und b) dargestellt, (längliche) Rippen oder Nuten haben. Eine solche Oberfläche der Breitseiten 5c verbessert den Halt des Bauteils 5 in der Ausnehmung 4.

Die Schmalseiten 5a und 5a' des Bauteils 5 verlaufen orthogonal zueinander und haben einen geraden Verlauf. Die Schmalseite 5b verbindet in einem Bogen die Schmalseite 5a mit der Schmalseite 5a'. Im vorliegenden Fall hat die Schmalseite 5b einen gebogenen Verlauf. Erfindungsgemäß hat die Schmalseite 5b in einem Schnitt parallel zu den zu den Deckplatten 2 gewandten Breitseiten 5c des Bauteils 5, die Form eines Kreisbogens. Speziell hat im vorliegenden Ausführungsbeispiel die äußere Kontur der Schmalseite 5b, in einem Schnitt parallel zu den zu den Deckplatten 2 gewandten Breitseiten 5c, die Form eines Kreisbogens eines Viertelkreises. Wie die Figuren 2a und b zeigen, hat die Ausnehmung 4 in der Leichtbauplatte 1, in einem Schnitt parallel zu den Breitseiten 1c der Leichtbauplatte 1, ebenfalls die Form eines Kreisbogens eines Viertelkreises. Die Schmalseite 5b mit dem gebogenen Verlauf berührt beispielsweise durchgängig die Innenseite der Ausnehmung 4 in der Leichtbauplatte 1 zumindest an einem Teil 4a der Ausnehmung 4, der von den beiden Deckplatten 2 gebildet wird (Ausführungsbeispiel in Figur 4). Im Bereich der Mittellage 3 berührt die Schmalseite 5b des Bauteils 5 zumindest einige Stege der Mittellage 3 (Ausführungsbeispiele der Figuren 3 und 4).

Wie Figur 2b) zeigt, ist der Radius der Ausnehmung 4 in der Leichtbauplatte 1 gleich dem Radius des Kreisbogens, auf dem die Schmalseite 5b des Bauteils 5 verläuft.

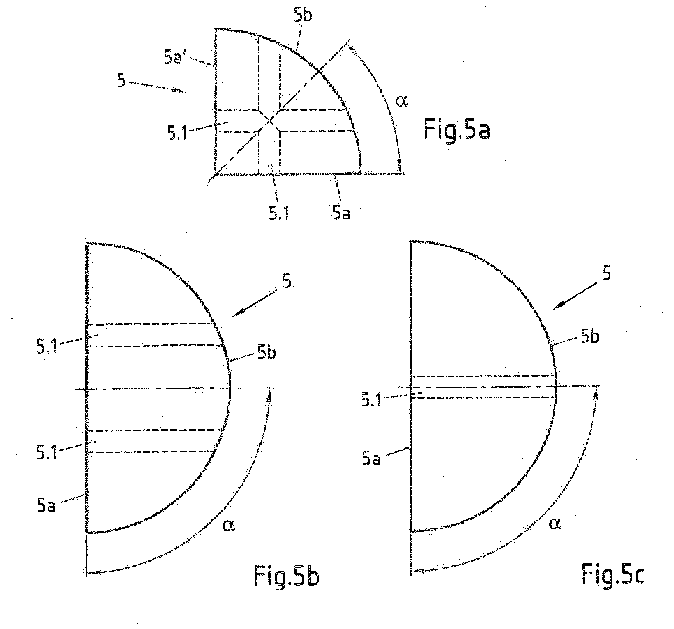

Die Figuren 5a) bis c) zeigen Ausführungsbeispiele eines Bauteils 5, welches eine zu einer Ebene, die orthogonal zu den Breitseiten 5c verläuft, spiegelsymmetrische Form hat. Die Symmetrieebene verläuft bei Figur 5a) durch die Winkelhalbierende der Schmalseiten 5a und 5a', die einen geraden Verlauf haben, ausgehend von dem Punkt, in dem sich die beiden Schmalseiten 5a und 5a' treffen (Winkel α zwischen Schmalseite und Symmetrieebene ist 45°). In dem Fall, dass das ein Insert bildende Bauteil 5 die Form eines Halbkreises hat, verläuft die Winkelhalbierende und damit die Symmetrieebene senkrecht zu der einzigen Schmalseite 5a, die einen geraden Verlauf hat, und durch die Mitte dieser Schmalseite (Winkel α zwischen Schmalseite und Symmetrieebene ist 90°) .

Dabei handelt es sich bei dem Bauteil in Figur 5a) ebenfalls um eines, bei dem die äußere Kontur der Schmalseite 5b die Form eines Kreisbogens eines Viertelkreises hat. In den Figuren 5b) und c) sind dagegen Ausführungsbeispiele dargestellt, bei denen die äußere Kontur der Schmalseite 5b die Form eines Kreisbogens eines Halbkreises hat. Bei den Ausführungsbeispielen in den Figuren 5b) und c) hat das Bauteil 5 nur zwei Schmalseiten, davon eine Schmalseite 5a mit einem geraden Verlauf und eine Schmalseite 5b mit einem gebogenen Verlauf.

Wie gesagt ist bei den Ausführungsbeispielen in den Figuren 5a) bis c) eine spiegelsymmetrische Form des Bauteils 5 vorgesehen. Bei dem Bauteil in Figur 5a) sind daher zwei orthogonal zueinander verlaufende Vertiefungen 5.1 zur Aufnahme eines Dübels 6 vorgesehen. Bei dem Ausführungsbeispiel in Figur 5b) sind zwei parallele Vertiefungen 5.1 zur Aufnahme eines Dübels 6 und in Figur 5c) nur eine einzige mittige Vertiefung 5.1 zur Aufnahme eines Dübels 6 vorgesehen.

Das jeweilige Bauteil 5 kann in jedem der Ausführungsbeispiele aus Holz, aus einem Holzwerkstoff, aus Kunststoff oder aus WPC bestehen.

Damit das Gewicht des Bauteils 5 auf ein Minimum reduziert wird, kann das Bauteil, wie Figur 1a) zeigt, neben der Vertiefung 5.1 für den Dübel 6 noch einen oder mehrere weitere Hohlräume 5.2 aufweisen, die beispielsweise durch Stege bzw. Wände voneinander getrennt sind.

Schließlich sei noch darauf hingewiesen, dass in den Figuren 2a), 2b), 3 und 4 beispielhaft dargestellt ist, wie ein Bauteil 5 an einer Ecke 1.1 einer Leichtbauplatte 1 eingesetzt ist. Zu diesem Zweck eignet sich besonders ein Bauteil, wie es in den Figuren 1a) und b) sowie 5a) und 6a) dargestellt ist. Es ist aber auch denkbar, ein Bauteil 5, wie es in den Figuren 5b) und c) dargestellt ist, in eine Leichtbauplatte 1 einzusetzen, was vorzugsweise an einer Kante 1.2 der Leichtbauplatte 1, also beabstandet von den Ecken 1.1 der Leichtbauplatte 1, geschieht.

## Patentansprüche

1. Leichtbauplatte (1), die zwei erste Schmalseiten (1a), zwei dazu orthogonale zweite Schmalseiten (1b) sowie zwei zu den Schmalseiten (1a,1b) orthogonale Breitseiten (1c) aufweist,
- mit zwei Deckplatten (2),
- mit einer zwischen den Deckplatten (2) angeordneten leichten Mittellage (3), die mit den Deckplatten (2) verklebt ist, und
- mit einem die beiden Deckplatten (2) innenseitig berührenden, zwischen die Deckplatten (2) in eine einen Radius aufweisende Ausnehmung (4) eingesetzten Bauteil (5), wobei das Bauteil (5) mehrere Schmalseiten (5a,5a',5b) und zwei dazu orthogonale, zu den Deckplatten (2) gewandte Breitseiten (5c) aufweist und wobei mindestens eine der Schmalseiten (5a,5a',5b) des Bauteils (5) einen geraden Verlauf und mindestens eine daran angrenzende weitere Schmalseite (5b) einen gebogenen Verlauf hat,
wobei das Bauteil (5) mindestens eine Vertiefung (5.1) aufweist, die zur Aufnahme eines Bolzens (6) geeignet ist, **dadurch gekennzeichnet,**
**dass** die weitere Schmalseite (5b), in einem Schnitt parallel zu den zu den Deckplatten (2) gewandten Breitseiten (5c) des Bauteils (5), die Form eines Kreisbogens hat und
**dass** der Radius der Ausnehmung (4) in der Leichtbauplatte (1) so auf den Radius des Kreisbogens der weiteren Schmalseite (5b) abgestimmt ist, dass die weitere Schmalseite (5b) mit dem gebogenen Verlauf die Innenseite der Ausnehmung (4) in der Leichtbauplatte (1) durchgängig berührt.

2. Leichtbauplatte (1) nach Anspruch 1, **dadurch gekennzeichnet, dass** die äußere Kontur der weiteren Schmalseite (5b) des Bauteils (5), in einem Schnitt parallel zu den zu den Deckplatten (2) gewandten Breitseiten (5c) des Bauteils (5), die Form eines Kreisbogens eines Halbkreises oder Kreissegmentes hat, wobei das Bauteil (5) genau zwei Schmalseiten (5a,5b) aufweist, von denen eine Schmalseite (5a) den geraden Verlauf und die weitere Schmalseite (5b) den gebogenen Verlauf hat.

3. Leichtbauplatte (1) nach Anspruch 1, **dadurch gekennzeichnet, dass** die äußere Kontur der weiteren Schmalseite (5b) des Bauteils (5), in einem Schnitt parallel zu den zu den Deckplatten (2) gewandten Breitseiten (5c) des Bauteils (5), die Form eines Kreisbogens eines Viertelkreises oder Abschnitts eines Kreissegmentes hat, wobei das Bauteil (5) genau drei Schmalseiten (5a,5a',5b) aufweist, von denen zwei orthogonal zueinander verlaufende Schmalseiten (5a,5a') den geraden Verlauf und die weitere Schmalseite (5b) den gebogenen Verlauf hat.

4. Leichtbauplatte (1) nach einem der vorangehenden Ansprüche, **dadurch gekennzeichnet, dass** die Ausnehmung (4) in der Leichtbauplatte (1), in einem Schnitt parallel zu den Breitseiten (1c) der Leichtbauplatte (1), die Form eines Kreisbogens eines Halbkreises oder Kreissegmentes oder die Form eines Kreisbogens eines Viertelkreises oder Abschnitts eines Kreissegmentes hat.

5. Leichtbauplatte (1) nach einem der vorangehenden Ansprüche, **dadurch gekennzeichnet, dass** der Abstand zwischen der weiteren Schmalseite (5b) des Bauteils (5) und der Innenseite der Ausnehmung (4) in der Leichtbauplatte (1), insbesondere einem in einer oder beiden Deckplatten (2) vorgesehenen Teil (4a) der Ausnehmung (4), maximal dem 2-Fachen der Dicke einer der Deckplatten (2), bevorzugt maximal der Dicke einer der Deckplatten (2) und besonders bevorzugt maximal der Hälfte der Dicke einer der Deckplatten (2), entspricht.

6. Leichtbauplatte (1) nach einem der vorangehenden Ansprüche, **dadurch gekennzeichnet, dass** das Bauteil (5) eine zu einer Ebene, die orthogonal zu den Breitseiten (5c) des Bauteils (5) verläuft, spiegelsymmetrische Form hat.

7. Leichtbauplatte (1) nach einem der vorangehenden Ansprüche, **dadurch gekennzeichnet, dass** das Bauteil (5) zusätzlich zu der Vertiefung (5.1) für den Bolzen einen oder mehrere weitere Hohlräume (5.2) aufweist.

8. Leichtbauplatte (1) nach einem der vorangehenden Ansprüche, **dadurch gekennzeichnet, dass** das Bauteil (5) an einer Ecke (1.1) der Leichtbauplatte (1) oder an einer Kante (1.2) der Leichtbauplatte (1) eingesetzt ist.

9. Leichtbauplatte (1) nach einem der vorangehenden Ansprüche, **dadurch gekennzeichnet, dass** ein Bolzen (6), beispielsweise Dübel, in die Vertiefung (5.1) in dem Bauteil (5), insbesondere stoff- oder kraftschlüssig, eingesetzt ist.

10. Möbel mit mindestens einer Leichtbauplatte (1) nach einem der vorangehenden Ansprüche und einem weiteren Möbelteil, das über den Bauteil (5) und mindestens einen Bolzen (6) mit der mindestens eine Leichtbauplatte (1) verbunden ist.

11. Verfahren zur Herstellung einer Leichtbauplatte (1) nach einem der Ansprüche 1 bis 9 , **dadurch gekennzeichnet, dass** in einem ersten Schritt ein Schichtaufbau mit zwei Deckplatten (2) und einer Mittellage (3) hergestellt wird und die Mittellage (3) mit den Deckplatten (2) verklebt wird, und dass in einem nachfolgenden zweiten Schritt eine Ausnehmung (4) zwischen den Deckplatten (2) vorgesehen wird, in die das Bauteil (5) eingesetzt wird.

12. Verfahren nach Anspruch 11 , **dadurch gekennzeichnet, dass** die Ausnehmung (4) in der Leichtbauplatte (1) von einem rotierenden Fräskopf erzeugt wird und das Bauteil (5) anschließend in die Ausnehmung (4) eingesetzt wird oder die Ausnehmung (4) in der Leichtbauplatte (1) durch Einpressen des Bauteils (5) in die Mittellage (3) erzeugt wird, wodurch das Material der Mittellage (3) verdrängt wird.

## Claims

1. Lightweight panel (1), which has two first narrow sides (1a), two second narrow sides (1b) orthogonal to the first and two to the narrow sides (1a, 1b) orthogonal broad sides (1c),
- with two cover plates (2),
- with a cover plate (2) arranged between the light central layer (3), which is glued to the cover plates (2), and
- with one component (5) contacting the two cover plates (2) on the inside, inserted between the cover plates (2) in a recess (4) having a radius, wherein the component (5) has a plurality of narrow sides (5a,5a',5b) and two broad sides (5c) orthogonal thereto, turned to the cover plates (2), and wherein at least one of the narrow sides (5a,5a',5b) of the component (5) has a straight course and at least one further narrow side (5b) adjacent thereto has a has a curved course, wherein the component (5) has at least one recess (5.1) which is suitable for receiving a bolt (6),
**characterized in**
**that** the further narrow side (5b), which in a sectional view is parallel to the broad sides (5c) of the component (5) turned to the cover plates (2), has the shape of an arc and
**that** the radius of the recess (4) in the lightweight panel is coordinated to the radius of the arc of the further narrow side (5b), so that the further narrow side (5b) with the curved course touches continuously the inside of the recess (4) in the lightweight panel (1).

2. Lightweight panel (1) according to claim 1, **characterized in that** the outer contour of the further narrow side (5b) of the component (5), which in a sectional view is parallel to the broad sides (5c) of the component (5) turned to the cover plates (2), has the shape of a arc of a semicircle or segment of a circle, wherein the component (5) has exactly two narrow sides (5a,5b) of which one narrow side (5a) has the straight course and the further narrow side (5b) has the curved course.

3. Lightweight panel (1) according to claim 1, **characterized in that characterized in that** the outer contour of the further narrow side (5b) of the component (5), which in a sectional view is parallel to the broad sides (5c) of the component (5) turned to the cover plates (2), has the shape of a circular arc of a quarter circle or section of a segment of a circle, wherein the component (5) has exactly three narrow sides (5a,5a',5b), two of which narrow sides orthogonal to each other (5a,5a') have the straight course and the further narrow side (5b) has the a curved course.

4. Lightweight panel (1) according to one of the preceding Claims, **characterized in that** the recess (4) in the lightweight panel (1), which in a sectional view is parallel to the broad sides (1c) of the lightweight panel (1), has the shape of an circular arc of a semicircle or circle segment or the shape of a circular arc of a quarter circle or section of a circular segment.

5. Lightweight panel (1) according to one of the preceding claims, **characterized in that** the distance between the further narrow side (5b) of the component (5) and the inner side of the recess (4) in the light-weight panel (1), in particular a part provided in one or both cover plates (2), in particular a part (4a) of the recess (4) provided in one or both cover plates (2), is at most 2 times the thickness of one of the cover plates (2), preferably at most the thickness of one of the cover plates (2), and particularly preferably at most half the thickness of one of the cover plates (2).

6. Lightweight panel (1) according to one of the preceding claims, **characterized in that** the component (5) has a shape which is mirror-symmetrical with respect to a plane which is orthogonal to the broad sides (5c) of the component (5).

7. Lightweight panel (1) according to one of the preceding claims, **characterized in that** the component (5) has in addition to the recess (5.1) for the bolt, one or more or more further cavities (5.2).

8. Lightweight panel (1) according to one of the preceding claims, **characterized in that** the component (5) is inserted at a corner (1.1) of the lightweight panel (1) or at an edge (1.2) of the lightweight panel (1) edge (1.2) of the lightweight panel (1).

9. Lightweight panel (1) according to one of the preceding claims, **characterized in that** a bolt (6), for example a dowel, is inserted into the recess (5.1) in the component (5), in particular in a material-locking or force-locking manner.

10. Furniture having at least one lightweight panel (1) according to one of the preceding claims and a further furniture part, which is connected via the component (5) and at least one bolt (6) to the at least one lightweight panel (1).

11. Method for producing a lightweight panel (1) according to one of the claims 1 to 9, **characterized in that**, in a first step, a layered structure with two cover panels (2) and a central layer (3) is produced and the central layer (3) is glued to the cover plates (2) and **in that** in a subsequent second step a recess (4) is provided between the cover plates (2) into which the component (5) is inserted.

12. Method according to claim 11,
**characterized in that** the recess (4) in the lightweight panel (1) is produced by a rotating milling head and the component (5) is subsequently inserted into the recess (4) or the recess (4) in the lightweight panel (1) is created by pressing the component (5) into the central layer (3), wherein the material of the central layer is thereby displaced.

## Revendications

1. Panneau de construction léger (1), qui présente deux premiers côtés étroits (1a), deux deuxièmes côtés étroits (1b) orthogonaux à ceux-ci ainsi que deux côtés larges (1c) orthogonaux aux côtés étroits (1a, 1b),
- avec deux plaques de recouvrement (2),
- avec une couche médiane légère (3), qui est collée aux plaqués de recouvrement (2) et disposée entre les plaques de recouvrement (2), et
- avec un élément (5) touchant les deux plaques de recouvrement (2) du côté intérieur et inséré entre les plaques de recouvrement (2) dans un évidement (4) présentant un rayon,
- où l'élément (5) présentant plusieurs côtés étroits (5a, 5a', 5b) et deux côtés larges (5c) orthogonaux à ceux-ci, tournés vers les plaques de recouvrement (2) et
- où au moins l'un des côtés étroits (5a, 5a', 5b) de l'élément (5) a un tracé rectiligne et au moins un côté étroit supplémentaire (5b) adjacent à celui-ci a un tracé courbé,
- où l'élément (5) présente au moins un renfoncement (5.1) apte à recevoir un boulon (6),
**caractérisé**
- **en ce que** le côté étroit supplémentaire (5b), dans une coupe parallèle aux côtés larges (5c) de l'élément (5) tournés vers les plaques de recouvrement (2), a la forme d'un arc de cercle, et
- **en ce que** le rayon de l'évidement (4) dans le panneau de construction léger (1) est adapté au rayon de l'arc de cercle du côté étroit supplémentaire (5b) de telle sorte que le côté étroit supplémentaire (5b) est, avec le tracé courbé, en contact continu avec le côté intérieur de l'évidement (4) dans le panneau de construction léger (1).

2. Panneau de construction léger (1) selon la revendication **1, caractérisé en ce que** le contour extérieur du côté étroit supplémentaire (5b) de l'élément (5) a, dans une coupe parallèle aux côtés larges (5c) de l'élément (5) tournés vers les plaques de recouvrement (2), la forme d'un arc de cercle d'un demi-cercle ou d'un segment de cercle, l'élément (5) présentant exactement deux côtés étroits (5a, 5b), dont un côté étroit (5a) a le tracé rectiligne et le côté étroit supplémentaire (5b) a le tracé courbé.

3. Panneau de construction léger (1) selon la revendication 1, **caractérisé en ce que** le contour extérieur du côté étroit supplémentaire (5b) de l'élément (5) a, dans une coupe parallèle aux côtés larges (5c) de l'élément (5) tournés vers les plaques de recouvrement (2), la forme d'un arc de cercle d'un quart de cercle ou d'une section d'un segment de cercle, l'élément (5) présentant exactement trois côtés étroits (5a, 5a', 5b), dont deux côtés étroits (5a, 5a') s'étendant orthogonalement l'un par rapport à l'autre ont le tracé rectiligne et le côté étroit supplémentaire (5b) a le tracé courbé.

4. Panneau de construction léger (1) selon l'une des revendications précédentes, **caractérisé en ce que** l'évidement (4) dans le panneau de construction léger (1) a, dans une coupe parallèle aux côtés larges (1c) du panneau de construction léger (1), la forme d'un arc de cercle d'un demi-cercle ou d'un segment de cercle, ou la forme d'un arc de cercle d'un quart de cercle ou d'une section d'un segment de cercle.

5. Panneau de construction léger (1) selon l'une des revendications précédentes, **caractérisé en ce que** la distance entre le côté étroit supplémentaire (5b) de l'élément (5) et le côté intérieur de l'évidement (4) dans le panneau de construction léger (1), en particulier une partie (4a) de l'évidement (4) prévue dans l'un ou les deux panneaux de recouvrement (2), correspond au maximum à 2 fois l'épaisseur de l'un des panneaux de recouvrement (2), de préférence au maximum à l'épaisseur de l'un des panneaux de recouvrement (2) et de manière particulièrement préférée au maximum à la moitié de l'épaisseur de l'un des panneaux de recouvrement (2).

6. Panneau de construction léger (1) selon l'une des revendications précédentes, **caractérisé en ce que** l'élément (5) a une forme symétrique en symétrie spéculaire par rapport à un plan qui s'étend orthogonalement aux côtés larges (5c) de l'élément (5).

7. Panneau de construction léger (1) selon l'une des revendications précédentes, **caractérisé en ce que** l'élément (5) présente, de manière additionnelle au renfoncement (5.1) pour le boulon, une ou plusieurs cavités supplémentaires (5.2).

8. Panneau de construction léger (1) selon l'une des revendications précédentes, **caractérisé en ce que** l'élément (5) est mis en place au niveau d'un coin (1.1) du panneau de construction léger (1) ou au niveau d'un bord (1.2) du panneau de construction léger (1).

9. Panneau de construction léger (1) selon l'une des revendications précédentes, **caractérisé en ce qu'**un boulon (6), par exemple une cheville, est mis en place dans le renfoncement (5.1) dans l'élément (5), en particulier par liaison de matière ou de force.

10. Meuble avec au moins un panneau de construction léger (1) selon une des revendications précédentes et une partie de meuble supplémentaire, laquelle est reliée à l'au moins un panneau de construction léger (1) par l'intermédiaire de l'élément (5) et d'au moins un boulon (6).

11. Procédé de fabrication d'un panneau de construction léger (1) selon l'une des revendications 1 à 9, **caractérisé**
- **en ce que**, dans une première étape, une structure de couches avec deux plaques de recouvrement (2) et une couche médiane (3) est réalisée, la couche médiane (3) est collée aux plaques de recouvrement (2), et
- **en ce que**, dans une deuxième étape ultérieure, un évidement (4) est prévu entre les plaques de recouvrement (2), dans lequel évidement l'élément (5) est mis en place.

12. Procédé selon la revendication 11, **caractérisé en ce que** l'évidement (4) dans le panneau de construction léger (1) est réalisé par une tête de fraisage rotative et l'élément (5) est ensuite mis en place dans l'évidement (4), ou bien l'évidement (4) dans le panneau de construction léger (1) est réalisé en enfonçant l'élément (5) dans la couche médiane (3), ce qui déplace le matériau de la couche médiane (3).
